# EUROPÄISCHE PATENTSCHRIFT

(11) **EP 1 002 193 B1**
(45) Veröffentlichungstag und Bekanntmachung des Hinweises auf die Patenterteilung: **12.06.2002**
(21) Anmeldenummer: 98943825.4
(22) Anmeldetag: 03.08.1998
(51) Int. Cl.: F02M 37/10, B60K 15/077

(54) **KRAFTSTOFFVERSORGUNGSSYSTEM**
FUEL SUPPLY SYSTEM
SYSTEME D'ALIMENTATION EN CARBURANT

(30) Priorität: 06.08.1997 DE 19733949
(43) Veröffentlichungstag der Anmeldung: 24.05.2000
(73) Patentinhaber: Siemens Aktiengesellschaft, 80333 München (DE)
(72) Erfinder: KOCHSMEIER, Christian, D-61476 Kronberg (DE); LÖW, Peter, Andreas, D-64711 Erbach (DE)
(86) Internationale Anmeldenummer: EP9804830
(87) Internationale Veröffentlichungsnummer: WO9907991

(56) Entgegenhaltungen:
- DE-A- 3 510 890
- DE-A- 4 023 037
- DE-U- 8 033 230
- US-A- 4 716 931
- PATENT ABSTRACTS OF JAPAN vol. 010, no. 218 (M-503), 30. Juli 1986 -& JP 61 055361 A (NISSAN MOTOR CO LTD), 19. März 1986

## Beschreibung

Die Erfindung bezieht sich auf ein Kraftstoffversorgungssystem mit den Merkmalen des Oberbegriffs des Patentanspruchs 1 (siehe JP-A-61055361).

Kraftstoffversorgungssysteme sind in den verschiedensten Ausführungen bekannt. Sie umfassen alle einen Behälter oder Haupttank, eine (Kraftstoff-)Pumpe, und meist auch einen Schwalltopf (oft Beruhigungsgefäß oder Reservoir genannt), aus dem die Pumpe ansaugt. Der Schwalltopf wird bevorzugt gefüllt, meist mittels einer Saugstrahlpumpe, die ihrerseits vom Vorlauf der Pumpe oder von einem Kraftstoffrücklauf gespeist werden kann.

Die Pumpe ist oft direkt im Schwalltopf angeordnet, mitunter sogar mit diesem zu einer Kraftstoffördereinheit zusammengefaßt (DE 35 10 890 C2). Diese wird komplett durch eine in der Tankdecke vorgesehene Aussparung eingeführt und an deren Rand mittels eines Abschlußdeckels befestigt. Der Schwalltopf nebst Pumpe wird möglichst nah an den Tankboden herangeführt und auf diesem abgestützt.

Bei modernen Kraftfahrzeugen bleibt immer weniger Raum für die lichte Höhe der Tanks, die dafür zum Erhalten eines hinreichenden Volumens breiter sein müssen. Damit kommt es zu verstärkten Schwappbewegungen des Tankinhalts bei Beschleunigungen in der Fahrwegebene. Um nun in allen denkbaren Fahrzuständen eine hinreichende Versorgung der Pumpe und des Antriebsmotors mit Kraftstoff sicherzustellen, muß man ein großes Schwalltopfvolumen vorsehen. Dieses ist jedoch nur mit einer relativ großen Höhe des Schwalltopfs sinnvoll realisierbar.

Man will darüber hinaus im Hinblick auf immer strengere Emissionsschutz-Vorschriften nach Möglichkeit die Anzahl potentieller Leckstellen des Kraftstoffversorgungssystems minimieren. Deshalb sucht man auch die erwähnte Aussparung zum Einführen der Kraftstoffördereinheit wegfallen zu lassen und letztere statt dessen durch die ohnehin vorhandene Einfüllöffnung einzuführen. Damit kollidieren jedoch die Forderungen, einerseits einen möglichst hohen Schwalltopf vorzusehen, andererseits jedoch auch die Pumpe jederzeit austauschen zu können. Wenn der Schwalltopf bis nahe unter die Tankdecke reicht, kann man die Pumpe nicht mehr separat ausbauen.

Es ist schon ein Kraftstoffversorgungssystem bekannt (DE 80 33 230 U1), dessen Schwalltopf nahezu gleich hoch wie die lichte Höhe des Tanks ist. Die Pumpe ist außerhalb des Schwalltopfs und des Tanks angeordnet und über eine getrennt verlegte Saugleitung gespeist. Der als Baueinheit mit einem Füllstandsgeber ausgeführte Schwalltopf wird durch eine seitliche Öffnung mit großem freiem Querschnitt in den Haupttank eingeführt.

In der älteren Patentanmeldung 197 29 261.5 ist die Herstellung von einstückig mit den Halbschalen eines gespritzten Tanks ausgeformten Leitungsabschnitten beschrieben, die insbesondere auch als bezüglich der Tankinnenwand ortsfeste Saugleitung ausgeführt sein können. Gespritzte Tanks werden bekanntlich im Gegensatz zu den heute verbreiteten blasgeformten Tanks aus zwei Halbschalen hergestellt, die nach Montage aller notwendigen Einbauteile an die Halbschalen-Innenwände mit einer umlaufenden Schweißnaht dicht zusammengefügt werden.

Der Erfindung liegt die Aufgabe zugrunde, ein Kraftstoffversorgungssystem der eingangs erörterten Art so auszubilden, daß dessen Montage vereinfacht wird.

Diese Aufgabe wird erfindungsgemäß mit den kennzeichnenden Merkmalen des Anspruchs 1 gelöst. Die Merkmale der Unteransprüche geben vorteilhafte Weiterbildungen dieses Gegenstands an.

Wenn die Pumpe im Haupttank außerhalb des Schwalltopfs angeordnet und mit diesem über mindestens eine an eine Innenwand des Haupttanks fest angeformte Saugleitung verbunden ist, kann einerseits der freie Querschnitt der Einführöffnung verringert werden. Zum anderen wird die fluidische Verbindung zwischen Schwalltopf und Pumpe einfach durch Aufstecken der Pumpe auf das feste Leitungsende hergestellt, wenn die Pumpe zumindest einen steckbaren fluidischen Anschluß aufweist.

Man kann einerseits den (lose vorgefertigten) Schwalltopf getrennt von der Pumpe in den Tank einbringen. Besonders vorteilhaft ist es aber für die Montage, wenn der Schwalltopf bzw. dessen umlaufende Seitenwand fest mit dem Tankboden verbunden, insbesondere einstückig mit diesem gespritzt und fluidisch mit der Saugleitung fest verbunden ist. Man kann ihn dann auch, wie eingangs gefordert, nahezu bis zur Tankdecke aufragen lassen, ohne einer Beschränkung durch die Größe einer Einführöffnung zu unterliegen. Zugleich wird durch Wegfall eines separaten Bodens für den Schwalltopf Material eingespart und Volumen gewonnen.

Zweckmäßig wird die kurze Saugleitung einerseits bodennah im Schwalltopf ausmünden und andererseits eine Mündung nahe der Innenwand, insbesondere dem Boden, des Haupttanks aufweisen, damit hier keinerlei besondere Montagehandgriffe notwendig werden und auf der Saugseite der Pumpe kein unerwünschtes Druckgefälle entsteht. Bei fest angespritztem Schwalltopf sind Undichtigkeiten zwischen diesem und der Saugleitung praktisch ausgeschlossen.

Besonders vorteilhaft wird auch der direkt an die Pumpe anschließende Abschnitt der Vorlaufleitung fest mit der Innenwand des Haupttanks verbunden sein. Damit sind feste Abstände zwischen den Mündungen von Saug- und Vorlaufleitung definiert.

Vorzugsweise ragt die Mündung der Saugleitung von der Innenwand in einem vorgegebenen festen Winkel ab, damit man den entsprechenden Pumpenstutzen einfach aufstecken kann. Läßt man die Vorlauf-Mündung in dieselbe Richtung von der Innenwand abragen wie die Mündung der Saugleitung, so erreicht man eine besonders rationelle Pumpenmontage, weil diese mit wenigen Handgriffen aufgesteckt und beidseits fluidisch kontaktiert werden kann.

Wenn darüber hinaus die Saug- und Vorlaufanschlüsse der Pumpe mit einem entsprechenden Abstand voneinander auf derselben, der Tankinnenwand zugewandten Seite des Pumpengehäuses ausmünden, ist die Pumpe sehr einfach auf die feststehenden Leitungsmündungen aufsteckbar und damit sofort fluidisch angeschlossen.

Es ist an sich bekannt, eine Teilfördermenge der Pumpe als Treibstrahl einer Saugstrahlpumpe abzuzweigen, mit der der Schwalltopf ständig aus dem Haupttank nachgefüllt wird. In weiterer Ergänzung des Erfindungsgedankens kann man für den hierzu benötigten dritten Anschluß der Pumpe ebenfalls eine fest angespritzte Leitung an der Tankinnenwand vorsehen.

Wenn man längere Leitungsabschnitte nicht an einem Stück anspritzen kann oder will, so wird man wenigstens deren Anschlußmündungen fest anspritzen, damit deren Lage eindeutig fest vorgegeben bleibt, und diese durch zusätzliche Schläuche oder dgl. untereinander verbinden.

Die steckbaren fluidischen Anschlüsse können mit handelsüblichen Dichtringen abgedichtet werden. Die Maßtoleranzen von angespritzten Leitungsmündungen sind bei entsprechender Formgebung gering. Im Hinblick auf die Austauschbarkeit der Pumpe durch Ausstecken und Einstekken einer Ersatzpumpe wird man die Dichtungen pumpen- bzw. stutzenseitig vorsehen, damit diese ggf. in einfacher Weise überprüft und ersetzt werden können.

Die Montage wird noch weiter vereinfacht, wenn auch die elektrischen Anschlüsse der Pumpe auf derselben Gehäuseseite wie die fluidischen Anschlüsse liegen und an der Tankinnenwand entsprechende elektrische Speisekontakte vorgesehen sind. Denn dann sind sämtliche benötigten Anschlüsse der Pumpe mit einem Handgriff durch Aufstecken herstellbar. Technisch bereitet es kein Problem, bei einer gespritzten Tankwand elektrische Anschlüsse mit definierter Position bezüglich der fluidischen Anschlüsse mit einzuspritzen.

Zusätzlich zu der mechanischen Anbindung über die Anschlüsse wird man natürlich noch weitere Festlegemittel vorsehen, um die Pumpe dauerhaft, jedoch lösbar an der Tankinnenwand zu haltem. Das können z.B. Rastmittel sein, die einerseits fest an der Tankinnenwand, andererseits an der Pumpe bzw. an deren Gehäuse vorgesehen sind, und ggf. in enger räumlicher Nachbarschaft mit den Mündungen der Fluidleitungen bzw. den elektrischen Anschlüssen stehen.

Natürlich könnte man das Pumpengehäuse selbst als Monoblock mit sämtlichen benötigten Anschlüssen, Stütz- und Festlegemitteln versehen. Will man jedoch die Pumpe als Großserien-Bauteil nicht an individuelle Tankgeometrien bzw. Anschlußpositionen anpassen, so wird man ein Gerüst oder einen Adapter vorsehen, der einerseits die Pumpe haltert, andererseits alle benötigten Anschlüsse auf einer Seite passend zu den tankseitig vorgegebenen Positionen zusammenfaßt und positioniert. Dann kann z.B. auch jede konventionelle, längs durchströmte Pumpe mit auf entgegengesetzten Gehäuseseiten austretenden Saug- und Vorlaufanschlüssen erfindungskonform verwendet werden, wobei der - in der Regel auf der Oberseite befindliche - Vorlauf über eine kurze Zwischenleitung mit dem steckbaren Vorlaufanschluß des Adapters intern verbunden ist.

Weil die Pumpe ohnehin nahe am Schwalltopf anzuordnen sein wird, kann man an dessen Wand Befestigungselemente zum Festlegen der Pumpe bzw. der Pumpen-Baueinheit vorsehen. Diese sind vorzugsweise als Schiebeführungen zu gestalten, mit denen der Montagevorgang weiter unterstützt und insbesondere ein zwangsläufig lagerichtiger Einbau der Pumpe erreicht wird.

Bei Bedarf wird man in an sich bekannter Weise Dämpfungselemente zwischen der Pumpe und deren tankseitiger Halterung vorsehen, um die Übertragung von Körperschall zu minimieren.

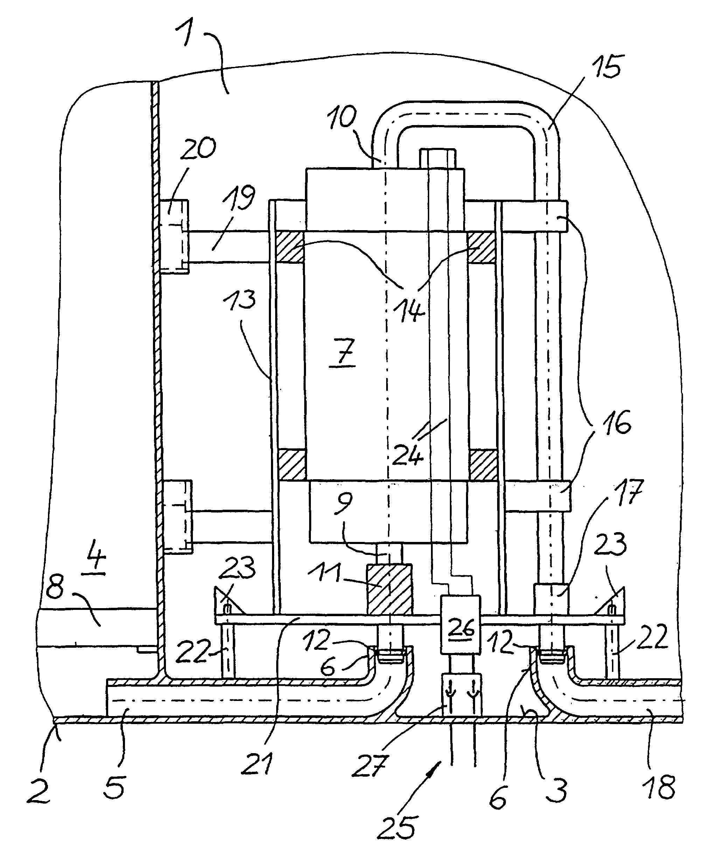

Weitere Einzelheiten und Vorteile des Gegenstands der Erfindung gehen aus der Zeichnung eines Ausführungsbeispiels und deren sich im folgenden anschließender eingehender Beschreibung hervor.

Die einzige Figur zeigt schematisch einen Querschnitt durch ein Kraftstoffversorgungssystem im Bereich des Schwalltopfs und der Kraftstoffpumpe. Ein nur im Ausschnitt gezeigter Haupttank 1 besteht im wesentlichen aus einer unteren Halbschale 2, die einen Tankboden 3 bildet, und einer hier nicht gezeigten oberen Halbschale, die die Tankdecke bildet. Beide Halbschalen werden nach ihrer Fertigung im Kunststoffspritzverfahren an ihrem Außenrand zum kompletten Tank mit zueinanderweisenden Innenwänden dicht zusammengefügt, vorzugsweise durch eine entlang der Teilfuge verlaufende Schweißnaht. Die vorstehend erörterte Aufteilung der Halbschalen ist natürlich nicht zwingend. Man kann auch eine andere Anordnung der Teilfuge wählen, z.B. vertikalen Verlauf, wenn es zweckmäßig erscheint. Im übrigen sei bezüglich der Tankherstellung auf die erwähnte ältere Anmeldung verwiesen.

An die Innenwand der Halbschale 2 bzw. an den Tankboden 3 ist ein Schwalltopf 4 bzw. dessen umlaufend geschlossene Seitenwand einstükkig angespritzt. Sein Boden ist also unmittelbar ein Abschnitt der Innenwand der Halbschale 2. Ebenfalls einstückig angeformt ist eine kurze Saugleitung 5, die einerseits im Bodenbereich des Schwalltopfs ausmündet, andererseits dessen Wand durchdringt und eine in kurzem Abstand rechtwinklig vom Tankboden 3 abragende Mündung 6 aufweist. Diese Anordnung hat den Vorteil, daß die Saugleitung nicht durch die Tankwand nach außen geführt werden muß. Die Mündung im Schwalltopf liegt zur optimalen Restausnutzung parallel zum Boden.

Bekanntlich sieht man einen Schwalltopf als bevorzugt befülltes Reservoir vor, aus dem eine hier neben dem Schwalltopf 4 angeordnete Kraftstoffpumpe 7 über die Saugleitung 5 gespeist wird. Der obere, hier nicht sichtbare Rand des Schwalltopfs 4 erstreckt sich bis in die Nähe der Tankdekke. Damit ist das Schwalltopfvolumen auch bei relativ geringer seitlicher Erstreckung hinreichend groß für sämtliche Betriebszustände, insbesondere auch bei hohen in der Fahrwegebene wirkenden Beschleunigungen bzw. Verzögerungen, zumal die Kraftstoffpumpe kein Volumen innerhalb des Schwalltopfs beansprucht. Hinreichenden Kraftstoffvorrat vorausgesetzt, liegt die Mündung der Saugleitung 5 in den Schwalltopf 4 immer unterhalb des Kraftstoffpegels. Über den Bodenbereich des Schwalltopfs 4 erstreckt sich stromauf der Mündung der Saugleitung 5 ein Kraftstoffilter 8.

Die Kraftstoffpumpe 7 ist hier vom konventionellen, axial durchströmten Typ, bei dem der Saugstutzen 9 und der Druckstutzen 10 auf einander gegenüberliegenden Gehäuseseiten angeordnet sind. Der Saugstutzen 9 ist, ggf. über ein als Dämpfer und Dichtung dienendes elastisches Zwischenstück 11, in die Mündung 6 der Saugleitung eingesteckt. Er trägt auf seinem Außenumfang in einer Nut eine Dichtung 12, welcher diese Steckverbindung gegen den Eintritt von ungefiltertem Kraftstoff auf der Saugseite der Pumpe 7 abdichtet.

Die Kraftstoffpumpe 7 ist in einem Adapter 13 über Dämpfungselemente 14 gehaltert. An ihren Druckstutzen ist eine kurze Zwischenleitung 15 (z.B. ein Wellschlauch) angeschlossen. Der Verlauf dieser Zwischenleitung ist über mehrere Stützelemente 16 des Adapters 13 festgelegt. Ihre endseitige, im Adapter radial und axial in einem Anschlußstück 17 festgelegte Mündung liegt parallel zur Mündung des Saugstutzen 9. Das Anschlußstück ist wie der Saugstutzen 9 der Pumpe mit einer Dichtung 12 versehen. Es ist in die Mündung eines wie die Saugleitung 5 einstückig an den Tankboden 3 angeformten Abschnitts einer Vorlaufleitung 18 eingesteckt, die in genau definiertem Abstand und parallel zu der Mündung der Saugleitung 5 ausmündet. Diese Vorlaufleitung durchdringt in ihrem weiteren Verlauf die Halbschale 2 nach außen - zur Herstellung sei auf die schon erwähnte ältere Anmeldung verwiesen -, wo dann ein Folgeabschnitt und ggf. ein weiterer Filter angeschlossen wird. Die Dichtung 12 am Anschlußstück verhindert Leckagen der Steckverbindung zwischen dem Anschlußstück 17 und der Vorlaufleitung 18.

Der Adapter 13 verfügt ferner über seitliche Stützen 19, die ihn gegen eine benachbarte Wand im Tank - hier gegen eine Wand des Schwalltopfs 4 - abstützen. An die betreffende Wand sind hierzu bevorzugt Festlegemittel 20 in Form von Schiebeführungen (mit T-Nut) angeformt, deren Längsachse parallel zu der Achsrichtung der Mündungen des Saugstutzen 9 und der Zwischenleitung 14 verläuft. Die Stützen 19 sind endseitig mit zu den Schiebeführungen passenden Gleitstücken ausgestattet.

Bei der Montage werden die Gleitstücke von oben her in die Schiebeführungen eingesetzt und dann die Baueinheit Pumpe-Adapter auf die Mündungen der angespritzten Leitungen 5 und 18 aufgesteckt. Vorzugsweise wird man die Schiebeführungen und die Mündungen der Leitungen nicht sämtlich in eine gemeinsame Ebene legen, um eine räumliche Abstützung des Adapters und der Pumpe zu erhalten. Man kann auch anderweitige Festlegemittel. z.B. eine Überwurfmutter mit Bajonettverschluß vorsehen.

Im gezeigten Ausführungsfall ist ohnehin noch eine zusätzliche Abstützung vorgesehen, bei der eine Basisplatte 21 des Adapters auf Bodenstützen 22 ruht, die an den Tankboden 3 angeformt sein können. An diesen Stellen kann man bei Bedarf lösbare Mittel zur weiteren Sicherung der fluidischen Steckverbindungen vorsehen, z.B. Schrauben oder Rastmittel (z.B. Clipse 23, wie angedeutet).

Wenn ein Austausch der Kraftstoffpumpe 7 bzw. der Dichtungen 12 nur durch eine relativ enge Öffnung des im Endzustand geschlossenen Haupttanks ausgeführt werden kann, so ist bei der Wahl der Mittel zur Festlegung der Kraftstoffpumpe auf deren einfache Handhabung zu achten.

Abweichend von der Darstellung kann man die parallelen Mündungen der Saugleitung 5 und der Vorlaufleitung 18 bei Bedarf abhängig von den Platzverhältnissen auch parallel oder schräg zum Tankboden anordnen, ohne damit das Steckprinzip zu verlassen. Damit würde sich lediglich die Einsteckrichtung des Adapters bzw. der Pumpe ändern.

Femer kann man auch bei Bedarf nur die Mündungsbereiche der Saugleitung 5 bzw. des Vorlauf-Leitungsabschnitts fest an die untere Halbschale 2 anspritzen und dazwischen Schlauchleitungen verlegen. Für den vorgesehenen Zweck genügt es, wenn die besagten Mündungsbereiche insbesondere zum Anschließen der Pumpe eindeutig positioniert und festgelegt sind.

In weiterer Ergänzung dieses äußerst montagefreundlichen Kraftstoffversorgungssystems wird der elektrische Anschluß der Kraftstoffpumpe (repräsentiert durch Leitungen 24) ebenfalls in den dem Tankboden 3 zugewandten Bereich des Adapters 13 verlegt. Mit wenig Aufwand kann man nämlich auch einen elektrischen Speiseanschluß 25 für die Kraftstoffpumpe in die Halbschale 2 bzw. den Tankboden 3 so einspritzen, daß dessen Kontakte mit entsprechenden Gegenkontakten 26 der Pumpe bzw. des Adapters gleichzeitig mit dem Fügen der fluidischen Steckverbindungen in einer elektrischen Steckverbindung 27 zusammengefügt werden. Diese Maßnahme ist nicht nur bei der Erstmontage von großem Vorteil, sondern unterstützt insbesondere auch einen eventuellen späteren Austausch der Kraftstoffpumpe.

## Patentansprüche

1. Kraftstoffversorgungssystem mit einem Haupttank (1), einem Schwalltopf (4), einer aus dem Schwalltopf gespeisten Pumpe (7) und Anschlußleitungen für die Pumpe, wobei die Pumpe im Haupttank außerhalb des Schwalltopfes angeordnet und mit diesem über mindestens eine Saugleitung (5) verbunden ist, **dadurch gekennzeichnet, daß** von der Saugleitung zumindest ein mit der Pumpe (7) zu verbindender Mündungsabschnitt (6) fest an eine Innenwand des Haupttanks (1) angeformt ist.

2. Kraftstoffversorgungssystem nach Anspruch 1, **dadurch gekennzeichnet, daß** der Schwalltopf fest am Tankboden (3) angeordnet, insbesondere einstückig mit diesem gespritzt und fluidisch mit der Saugleitung (5) fest verbunden ist.

3. Kraftstoffversorgungssystem nach Anspruch 1 oder 2, **dadurch gekennzeichnet, daß** die eine Wand des Schwalltopfs durchdringende Saugleitung (5) einerseits bodennah im Schwalltopf (4) und andererseits nahe der Innenwand, insbesondere dem Boden (3), des Haupttanks (1) ausmündet und insgesamt fest an den Haupttank angeformt ist.

4. Kraftstoffversorgungssystem nach einem der vorstehenden Ansprüche, **dadurch gekennzeichnet, daß** ferner ein an die Kraftstoffpumpe (7) anzuschließender Mündungsabschnitt einer Vorlaufleitung (18) an die Innenwand des Haupttanks (1) fest angeformt ist.

5. Kraftstoffversorgungssystem nach Anspruch 4, **dadurch gekennzeichnet, daß** die Saugleitung (5) und die Vorlaufleitung (18) parallele und mit einem vorgegebenen Abstand voneinander an der Innenwand angeordnete Mündungen (6) aufweisen.

6. Kraftstoffversorgungssystem nach Anspruch 4 oder 5, **dadurch gekennzeichnet, daß** noch mindestens eine weitere an die Pumpe anzuschließende Leitung, insbesondere eine Speiseleitung für eine Strahlpumpe zum Befüllen des Schwalltopfs, zumindest im Mündungsbereich an den Tankboden angeformt ist und ebenfalls eine zu den Mündungen der Saug- und der Vorlaufleitung parallel ausgerichtete Mündung hat.

7. Kraftstoffversorgungssystem nach einem der vorstehenden Ansprüche, **dadurch gekennzeichnet, daß** die Pumpe als Baueinheit mit auf derselben Gehäuseseite ausmündenden Saug- und Vorlaufanschlüssen ausgeführt ist.

8. Kraftstoffversorgungssystem nach einem der vorstehenden Ansprüche, **dadurch gekennzeichnet, daß** im Bereich der Saugleitung (5) ferner ein elektrischer Speiseanschluß (25) der Pumpe fest mit der Innenwand (3) des Haupttanks (1) verbunden und von dessen Innenseite her kontaktierbar ist.

9. Kraftstoffversorgungssystem nach Anspruch 8, **dadurch gekennzeichnet, daß** die Pumpe (7) als Baueinheit einen elektrischen Steckanschluß (26) zum Verbinden mit dem Speiseanschluß aufweist, der in gleicher Richtung wie die Fluidanschlüsse der Pumpe einsteckbar ist.

10. Kraftstoffversorgungssystem nach einem der vorstehenden Ansprüche, **dadurch gekennzeichnet, daß** die Pumpe (7) in Baueinheit mit einem Adapter (13) zusammengefaßt ist, welcher einerseits die Pumpe selbst und andererseits die benötigten Anschlüsse (9, 17, 26) in zueinander korrekt auf die tankseitigen Anschlüsse bzw. Leitungs-Mündungen ausgerichteter Anordnung trägt.

11. Kraftstoffversorgungssystem nach einem der vorstehenden Ansprüche, **dadurch gekennzeichnet, daß** an einer Innenwand des Tanks, insbesondere einer Außenwand des Schwalltopfs (4) Mittel (20) zum Festlegen der Pumpe (7) vorgesehen sind.

12. Kraftstoffversorgungssystem nach den Ansprüchen 5 und 11, **dadurch gekennzeichnet, daß** die Festlegemittel (20) als Schiebeführungen ausgeführt und ihre Achsen parallel zu den Anschlüssen (6) der Saugleitung (5) und der Vorlaufleitung (18) ausgerichtet sind.

13. Kraftstoffversorgungssystem nach einem der vorstehenden Ansprüche, **dadurch gekennzeichnet, daß** lösbare Halterungsmittel (Clipse 23) zum Verbinden der Pumpe (7) dem Tankboden vorgesehen sind.

14. Kraftstoffversorgungssystem nach einem der vorstehenden Ansprüche, **dadurch gekennzeichnet, daß** in dem Schwalltopf (4) stromauf der Mündung der Saugleitung (5) ein Filter (8) vorgesehen ist.

## Claims

1. Fuel supply system with a main tank (1), an anti-surge pot (4), a pump (7) fed from the anti-surge pot, and connection lines for the pump, the pump being arranged in the main tank outside the anti-surge pot and being connected to the latter via at least one suction line (5), **characterized in that** at least a mouth portion (6) of the suction lines, which portion is to be connected to the pump (7), is formed integrally in a fixed manner on an inner wall of the main tank (1).

2. Fuel supply system according to Claim 1, **characterized in that** the anti-surge pot is arranged in a fixed manner on the tank bottom (3), in particular is injection-moulded in one piece with the latter and is connected fluidically in a fixed manner to the suction line (5).

3. Fuel supply system according to Claim 1 or 2, **characterized in that** the suction line (5) passing through one wall of the anti-surge pot opens out close to the bottom in the anti-surge pot (4), on the one hand, and close to the inner wall, in particular the bottom (3), of the main tank (1), on the other hand, and overall is formed integrally in a fixed manner on the main tank.

4. Fuel supply system according to one of the preceding claims, **characterized in that** a mouth portion, to be connected to the fuel pump (7), of a forward-flow line (18) is furthermore formed integrally in a fixed manner on the inner wall of the main tank (1)

5. Fuel supply system according to Claim 4, **characterized in that** the suction line (5) and the forward-flow line (18) have parallel mouths (6), which are arranged at a predetermined distance apart on the inner wall.

6. Fuel supply system according to Claim 4 or 5, **characterized in that** at least one further line to be connected to the pump, in particular a feed line for a jet pump for filling the anti-surge pot, is formed integrally on the tank bottom, at least in the region of the mouth, and likewise has a mouth aligned parallel to the mouths of the suction and the forward-flow line.

7. Fuel supply system according to one of the preceding claims, **characterized in that** the pump is embodied as a constructional unit with suction and forward-flow connections opening on the same side of the housing.

8. Fuel supply system according to one of the preceding claims, **characterized in that** an electric feed connection (25) of the pump is furthermore firmly connected to the inner wall (3) of the main tank (1) in the region of the suction line (5) and can be contacted from the inside of the main tank.

9. Fuel supply system according to Claim 8, **characterized in that**, as a constructional unit, the pump (7) has an electrical plug connection (26) for connection to the feed connection, which can be plugged in in the same direction as the fluid connections of the pump.

10. Fuel supply system according to one of the preceding claims, **characterized in that** the pump (7) is combined in a constructional unit with an adapter (13) which, on the one hand, carries the pump itself and, on the other hand, carries the required connections (9, 17, 26) in an arrangement relative to one another in which they are aligned correctly with the connections or line mouths on the tank.

11. Fuel supply system according to one of the preceding claims, **characterized in that** means (20) for fixing the pump (7) are provided on an inner wall of the tank, in particular an outer wall of the anti-surge pot (4).

12. Fuel supply system according to Claims 5 and 11, **characterized in that** the fixing means (20) are embodied as slideways and their axes are aligned parallel to the connections (6) of the suction line (5) and of the forward-flow line (18).

13. Fuel supply system according to one of the preceding claims, **characterized in that** releasable holding means (clips 23) for connecting the pump (7) to the tank bottom are provided.

14. Fuel supply system according to one of the preceding claims, **characterized in that** a filter (8) is provided in the anti-surge pot (4) upstream of the mouth of the suction line (5).

## Revendications

1. Système d'alimentation en carburant comportant un réservoir principal (1), un pot stabilisateur (4), une pompe (7) alimentée à partir du pot stabilisateur, et des conduites de raccordement pour la pompe, la pompe étant disposée dans le réservoir principal, en dehors du pot stabilisateur, et étant reliée à celui-ci par au moins une conduite d'aspiration (5),
**caractérisé en ce que**, depuis la conduite d'aspiration, au moins un élément d'embouchure (6) à relier à la pompe (7) est moulé de façon fixe sur une paroi intérieure du réservoir principal (1).

2. Système d'alimentation en carburant suivant la revendication 1, **caractérisé en ce que** le pot stabilisateur est disposé fixe sur le fond (3) du réservoir, et en particulier est moulé par injection en formant une seule pièce avec lui et est relié de façon fixe hydrauliquement à la conduite d'aspiration (5).

3. Système d'alimentation en carburant suivant la revendication 1 ou 2, **caractérisé en ce que** la conduite d'aspiration (5) traversant une paroi du pot stabilisateur débouche, d'une part, au voisinage du fond dans le pot stabilisateur (4), et, d'autre part, au voisinage de la paroi intérieure, en particulier du fond (3) du réservoir principal (1) et est, dans son ensemble, moulée de façon fixe avec le réservoir principal.

4. Système d'alimentation en carburant suivant l'une des revendications précédentes, **caractérisé en ce que**, de plus, un élément d'embouchure d'une conduite d'amenée (18) à raccorder à la pompe à carburant (7) est formé de façon fixe avec la paroi intérieure du réservoir principal (1).

5. Système d'alimentation en carburant suivant la revendication 4, **caractérisé en ce que** la conduite d'aspiration (5) et la conduite d'amenée (18) présentent des embouchures (6) parallèles et disposées à une distance prédéfinie l'une de l'autre sur la paroi intérieure.

6. Système d'alimentation en carburant suivant la revendication 4 ou 5, **caractérisé en ce qu'**encore au moins une autre conduite se raccordant à la pompe, en particulier une conduite d'alimentation pour une pompe à jet pour le remplissage du pot stabilisateur; est formée au moins sur le fond du réservoir dans la zone de l'embouchure, et présente, de même, une embouchure dirigée parallèlement aux embouchures de la conduite d'aspiration et de la conduite d'amenée.

7. Système d'alimentation en carburant suivant l'une des revendications précédentes, **caractérisé en ce que** la pompe est réalisée sous la forme d'une unité de construction comportant des raccords d'aspiration et d'amenée débouchant sur la même face du carter.

8. Système d'alimentation en carburant suivant l'une des revendications précédentes, **caractérisé en ce que**, dans la zone de la conduite d'aspiration (5), un raccord électrique d'alimentation (25) de la pompe (7) est, de plus, relié de façon fixe à la paroi intérieure (3) du réservoir principal (1) et peut être mis en contact depuis la face intérieure de celui-ci.

9. Système d'alimentation en carburant suivant la revendication 8, **caractérisé en ce que** la pompe (7), sous la forme d'une unité de construction, présente un raccord d'enfichage (26) pour la liaison avec le raccord d'alimentation, qui peut être enfiché dans la même direction que les raccords de fluide.

10. Système d'alimentation en carburant suivant l'une des revendications précédentes, **caractérisé en ce que** la pompe (7) forme un ensemble d'unité de construction avec un adaptateur (13) qui porte, d'une part, la pompe elle-même et, d'autre part, les raccords nécessaires (9, 17, 26) dans une disposition s'adaptant correctement entre eux avec respectivement les raccords côté réservoir et les embouchures des conduites.

11. Système d'alimentation en carburant suivant l'une des revendications précédentes, **caractérisé en ce que**, sur une paroi intérieure du réservoir, en particulier sur une paroi externe du pot stabilisateur (4), sont prévus des moyens (20) pour fixer la pompe (7).

12. Système d'alimentation en carburant suivant les revendications 5 et 11, **caractérisé en ce que** les moyens de fixation (20) sont réalisés sous la forme de glissières de guidage et **en ce que** leurs axes sont dirigés parallèlement aux raccords (6) de la conduite d'aspiration (5) et de la conduite d'amenée (18).

13. Système d'alimentation en carburant suivant l'une des revendications précédentes, **caractérisé en ce que** des moyens de fixation détachables (clips 23) sont prévus pour relier la pompe (7) au fond du réservoir.

14. Système d'alimentation en carburant suivant l'une des revendications précédentes, **caractérisé en ce que**, dans le pot stabilisateur (4), un filtre (8) est prévu en amont de l'embouchure de la conduite d'aspiration (5).
